# EUROPEAN PATENT APPLICATION

(11) **EP 3 528 229 A1**
(43) Date of publication of application: **21.08.2019**
(21) Application number: 19151692.1
(22) Date of filing: 14.01.2019
(51) Int. Cl.: G08G 1/01, G08G 1/0967

(54) **TRAFFIC CONTROL SYSTEM**

(30) Priority: 26.01.2018 US 201862622352 P; 15.02.2018 US 201815897542
(71) Applicant: Aptiv Technologies Limited, St. Michael (BB)
(72) Inventor: AGARWAL, Divya, SUNNYVALE, CALIFORNIA 94086 (US); LAUR, Michael, H, MISSION VIEJO, CALIFORNIA 92692 (US); HILNBRAND, Brian R., MOUNTAIN VIEW, CALIFORNIA 94043 (US)
(74) Representative: Manitz Finsterwald Patent- und Rechtsanwaltspartnerschaft mbB

(57) **Abstract**

A traffic control system (10) includes a detector (20) and a controller-circuit (26). The detector (20) is configured to detect a traffic-situation (14) characterized as inhibiting traffic-flow (22). The controller-circuit (26) is configured to communicate with the detector (20) and a traffic-device (28). The traffic-device (28) is operable to indicate a lane-designation (30) of a travel-lane (18). The controller-circuit (26) is configured to send a request (16) to the traffic-device (28) indicative of a desired-designation (34) of the travel-lane (18) in accordance with a determination by the controller-circuit (26) that the traffic-situation (14) has occurred.

## Description

### TECHNICAL FIELD OF INVENTION

This disclosure generally relates to a traffic control system, and more particularly relates to a traffic control system that requests a lane-designation.

### BRIEF DESCRIPTION OF DRAWINGS

The present invention will now be described, by way of example with reference to the accompanying drawings, in which:
Fig. 1 is an illustration of a traffic control system in accordance with one embodiment;
Fig. 2 is an illustration of a traffic-situation in accordance with one embodiment;
Fig. 3A is an illustration of another traffic-situation in accordance with one embodiment;
Fig. 3B is an illustration of the traffic-situation of Fig. 3A with a host-vehicle making a request to a traffic-device in accordance with one embodiment; and
Fig. 4 is an illustration of a traffic control method in accordance with another embodiment.

### SUMMARY

According to the invention, a traffic control system comprises a detector configured to detect a traffic-situation proximate to a host-vehicle, said traffic-situation characterized as inhibiting traffic-flow; and a controller-circuit configured to communicate with the detector and a traffic-device, said traffic-device operable to indicate a lane-designation of a travel-lane, wherein the controller-circuit is configured to send a request to the traffic-device, said request indicative of a desired-designation of the travel-lane in accordance with a determination by the controller-circuit that the traffic-situation has occurred.

The controller-circuit may be configured to operate the host-vehicle in an automated-mode characterized by the controller-circuit steering the host-vehicle. The traffic control system may further comprise, in accordance with the lane-designation corresponding to the desired-designation, the controller-circuit steering the host-vehicle, in the automated-mode, into the travel-lane. The traffic-device may include a barrier that blocks access to a restricted-lane of a roadway and the desired-designation may include operation of the barrier to an open-state. The controller-circuit may be in communication with a digital-map configured to indicate a location of the barrier relative to the host-vehicle.

The traffic-situation may include a traffic-volume greater than a traffic-threshold. The traffic-situation may include a blockage of a portion of the roadway ahead. The traffic-situation may be a speed-limited-vehicle traveling on the roadway ahead.

According to the invention, a traffic control method comprises detecting, with a detector, a traffic-situation proximate to a host-vehicle, said traffic-situation characterized as inhibiting traffic-flow; determining that the traffic-situation has occurred, with a controller-circuit configured to communicate with the detector and a traffic-device, said traffic-device operable to indicate a lane-designation of a travel-lane; and sending a request to the traffic-device, with the controller-circuit, said request indicative of a desired-designation of the travel-lane in accordance with a determination by the controller-circuit that the traffic-situation has occurred.

The controller-circuit may be configured to operate the host-vehicle in an automated-mode characterized by the controller-circuit steering the host-vehicle. The traffic control method may comprise, in accordance with the lane-designation corresponding to the desired-designation, the controller-circuit steering the host-vehicle, in the automated-mode, into the travel-lane.

The traffic-device may include a barrier that blocks access to a restricted-lane of a roadway and the desired-designation may include operation of the barrier to an open-state. The controller-circuit may be in communication with a digital-map configured to indicate a location of the barrier relative to the host-vehicle. The traffic-situation may include a traffic-volume greater than a traffic-threshold. The traffic-situation may include a blockage of a portion of the roadway ahead. The traffic-situation may be a speed-limited-vehicle traveling on the roadway ahead.

### DETAILED DESCRIPTION

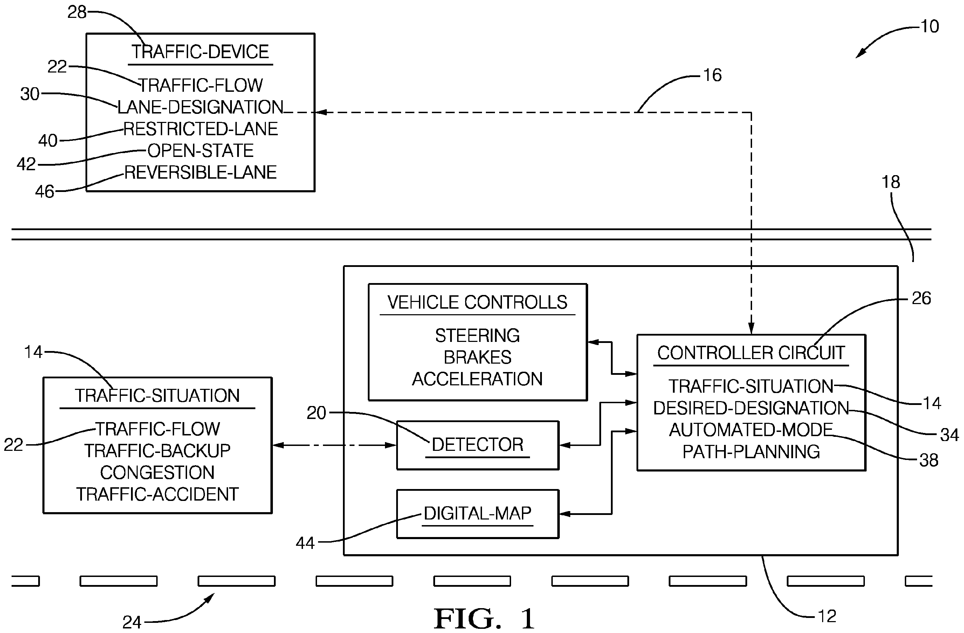

Fig. 1 illustrates a non-limiting example of a traffic control system 10, hereafter referred to as the system 10, installed on a host-vehicle 12. As will be described in more detail below, the system 10 is an improvement over other traffic control systems because the system 10 recognizes a developing traffic-situation 14 and requests 16 a travel-lane 18 to be designated for use by the host-vehicle 12.

The system 10 includes a detector 20 configured to detect the traffic-situation 14 characterized as inhibiting traffic-flow 22. In the example illustrated in Fig. 1, the detector 20 is a camera mounted on the host-vehicle 12. In other embodiments contemplated, but not shown, the detector 20 is a lidar, or a radar, or any combination thereof. The detector 20 may also be remotely mounted to a traffic-infrastructure or to another vehicle. As used herein, inhibiting traffic-flow 22 includes, but is not limited to, any scenario where the traffic is moving at speeds significantly below (e.g. less than 60%) posted speed limits, such as a traffic back-up on a roadway 24 where stop-and-go traffic may exist. The traffic-situation 14 may include a traffic-volume greater than a traffic-threshold, a blockage of a portion of the roadway 24 ahead due to an emergency vehicle and/or a traffic accident, or may be due to a speed-limited-vehicle traveling on the roadway 24 ahead (e.g. farming or construction equipment), or may be caused by a steep a grade on the roadway 24 ahead where truck traffic is unable to maintain the posted speed limits.

The system 10 also includes a controller-circuit 26 configured to communicate with the detector 20 and a traffic-device 28. The controller-circuit 26 may be hardwired to the detector 20 that is mounted on the host-vehicle 12, or may communicate through any of the know wireless connection protocols. The traffic-device 28 is operable to indicate a lane-designation 30 of the travel-lane 18 (i.e. indicate a direction of traffic-flow 22 in the travel-lane 18). Indicia may include a visual display (e.g. a sign) and/or a barrier 32 that physically blocks access to the travel-lane 18.

The controller-circuit 26 is configured to send the request 16 to the traffic-device 28 that is indicative of a desired-designation 34 of the travel-lane 18 in accordance with a determination by the controller-circuit 26 that the traffic-situation 14 has occurred. The request 16 for the desired-designation 34 may be for specific travel-lanes 18 to be restricted to use only by the host-vehicle 12, or may include other-vehicles 36 along with the host-vehicle 12. The controller-circuit 26 may send the request 16 to the traffic-device 28 using any of the known wireless communication protocols including dedicated short-range communications (DSRC), cellular, WiFi, radio frequency, etc. The controller-circuit 26 may control vehicle-controls (not specifically shown) such as steering, brakes, and an accelerator. The controller-circuit 26 may include a processor (not shown) such as a microprocessor or other control circuitry such as analog and/or digital control circuitry including an application specific integrated circuit (ASIC) for processing data as should be evident to those in the art. The controller-circuit 26 may include a memory (not specifically shown), including non-volatile memory, such as electrically erasable programmable read-only memory (EEPROM) for storing one or more routines, thresholds, and captured data. The one or more routines may be executed by the processor to perform steps for determining if the traffic-situation 14 exists based on signals received by the controller-circuit 26 from the detector 20, as described herein.

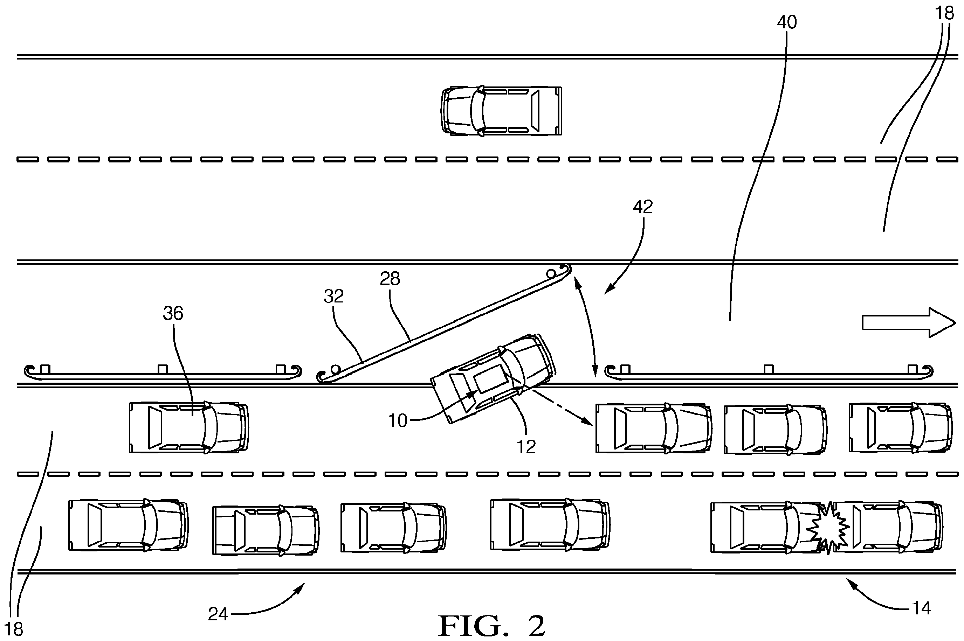

Fig. 2 illustrates the traffic-situation 14 where the host-vehicle 12 is traveling on a controlled-access roadway 24 (i.e. divided traffic with no intersections or property access). The controller-circuit 26 determines that the traffic-situation 14 (e.g. the traffic accident in a right-hand travel-lane 18) has occurred based on the signals received by the camera (i.e. the detector 20) indicating that the traffic-flow 22 in the right-hand travel-lane 18 has stopped. The controller-circuit 26 may use other inputs to assist in the determination of the traffic-situation 14, such as a host-vehicle-speed being less than the posted speed limit for the roadway 24, and/or any broadcast received from other-vehicles 36 or the traffic-infrastructure.

The controller-circuit 26 is configured to operate the host-vehicle 12 in an automated-mode 38 characterized by the controller-circuit 26 steering the host-vehicle 12. As used herein, the term automated-mode 38 is not meant to suggest that fully automated or autonomous operation of the host-vehicle 12 is required. It is contemplated that the teachings presented herein are applicable to instances where the host-vehicle 12 is entirely manually operated by a human and the automation is merely providing emergency vehicle controls to the human.

The traffic-device 28 is the barrier 32 that blocks access to a restricted-lane 40 of the roadway 24 (e.g. an express lane, HOV lane, autonomous-vehicle lane) and the desired-designation 34 includes operation of the barrier 32 to an open-state 42 where the barrier 32 is opened to allow the host-vehicle 12 access to the restricted-lane 40. In the example illustrated in Fig. 2, the controller-circuit 26, in accordance with the lane-designation 30 corresponding to the desired-designation 34 of the open-state 42, steers the host-vehicle 12 in the automated-mode 38 into the travel-lane 18 that is the restricted-lane 40.

The controller-circuit 26 may also be communication with a digital-map 44 that resides either on the host-vehicle 12 or in a cloud storage server accessible by wireless communication. The digital-map 44 is configured to indicate a location of the barrier 32 on the roadway 24 relative to the host-vehicle 12 to aid the system 10 with path-planning for the host-vehicle 12. Preferably, the system 10 identifies the location of the barrier 32 in advance of the host-vehicle 12 arriving at the location and requests 16 the open-state 42 so that the host-vehicle 12 may enter the restricted-lane 40 without waiting for the barrier 32 to open.

The system 10 may request 16 the barrier 32 to remain in the open-state 42 to enable the other-vehicle 36 to follow the host-vehicle 12 into the restricted-lane 40. The other-vehicle 36 may negotiate a following-arrangement with the host-vehicle 12 by way of vehicle-to-vehicle communications, such as DSRC, or may negotiate the following-arrangement through a third-party, or through the traffic-infrastructure. The host-vehicle 12 may request 16 the barrier 32 remain in the open-state 42 for a period of time that is based on a distance between the other-vehicle 36 and the host-vehicle 12. The distance may be determined by the controller-circuit 26 based on a radar or lidar mounted on the host-vehicle 12 or on the other-vehicle 36. The other-vehicle 36 may also transmit the distance and/or range-rate to the host-vehicle 12 via DSRC. The other-vehicle 36 may be equipped with an automated-speed-control that controls a speed of the other-vehicle 36 based on the distance to the host-vehicle 12. The controller-circuit 26 may be configured to determine that the other-vehicle 36 includes the automated-speed-control based on the signals received from the other-vehicle 36, or based on a range-rate-history, and request 16 the open-state 42 in accordance with the determination by the controller-circuit 26 that the other-vehicle 36 includes the automated-speed-control. As part of the following-arrangement the other-vehicle 36 may be required to exit the restricted-lane 40 then the host-vehicle 12 exits the restricted-lane 40, or the other-vehicle 36 may negotiate a new following-arrangement with another-host-vehicle and continue traveling in the restricted-lane 40 in the event the host-vehicle 12 requires an early exit. The other-vehicle 36 may also include an automated-lane-keeping that controls a lane-position of the other-vehicle 36 based on the lane-position of the host-vehicle 12.

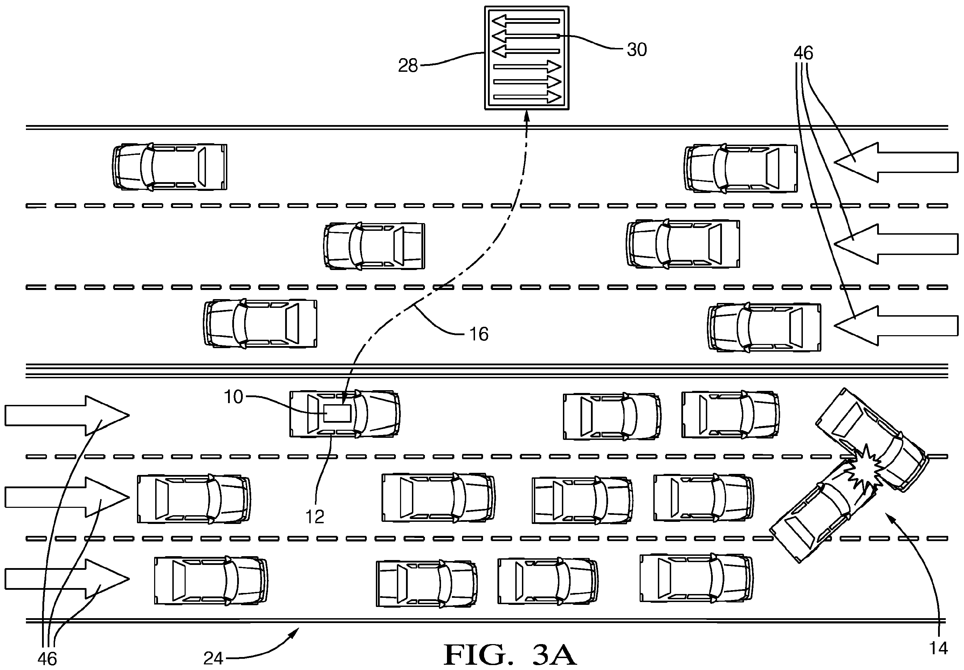

Fig 3A. Illustrates the traffic-situation 14 where the host-vehicle 12 is traveling on an urban street where the travel-lanes 18 are reversible-lanes 46 and the traffic-situation 14 is the traffic accident on the street ahead that is inhibiting the traffic-flow 22. The host-vehicle 12 and other-vehicles 36 are stopped on the roadway 24 and inhibited from bypassing the traffic-accident due to the lane-designations 30 as indicated by the traffic-device 28. As used herein, the reversible-lanes 46 are travel-lanes 18 in which traffic may travel in either direction depending on certain conditions, such as the time of day, and may be used to improve the traffic-flow 22 into and/or out of an urban area. The traffic-device 28 is a sign or traffic-light that indicates which lanes are open for travel in the specified direction. The arrows illustrate the direction of travel for each reversible-lane 46, with three travel-lanes 18 having traffic moving in one direction and three travel-lanes 18 having traffic move in the opposite direction. The controller-circuit 26 determines that the traffic-situation 14 (i.e. the traffic accident on the street ahead) has occurred based on the signals received by the camera (i.e. the detector 20) indicating that the traffic-flow 22 has stopped and sends the request 16 to the traffic-device 28. The controller-circuit 26 may use other inputs to assist in the determination of the traffic-situation 14, such as a host-vehicle-speed being less than the posted speed limit for the roadway 24, and/or any broadcast received from other-vehicles 36 or the traffic-infrastructure.

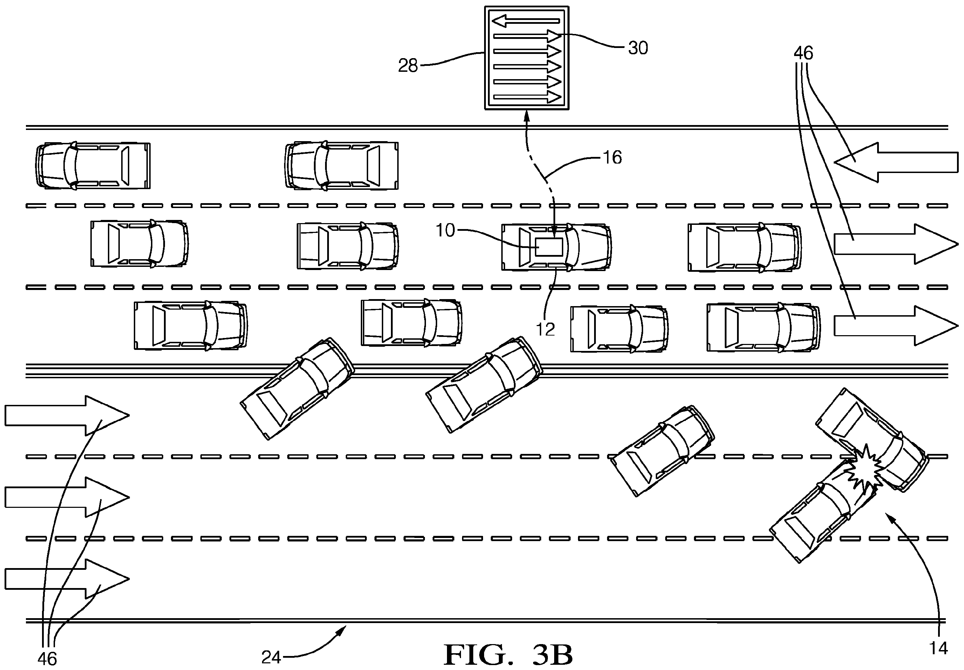

Fig. 3B illustrates the traffic-situation 14 of Fig. 3A where the controller-circuit 26 has determined that the traffic-situation 14 has occurred, and the request 16 to the traffic-device 28 indicative of the desired-designation 34 of the reversible-lanes 46 has been accepted. The request 16 for the desired-designation 34 is for specific travel-lanes 18 to be restricted to use by the host-vehicle 12 and other-vehicles 36 to bypass the traffic accident. The controller-circuit 26 has steered the host-vehicle 12 into the reversible-lane 46 in which the direction of travel is now opposite that which is illustrated in Fig. 3A, and the other-vehicles 36 are merging into the newly designated reversible-lanes 46 to bypass the traffic accident. The controller-circuit 26 may send the request 16 to other traffic-devices 28 ahead on the roadway 24 to maintain the desired-designation 34 of the travel-lanes 18 thereby providing advanced notification to oncoming traffic that the lane-designation 30 has changed. This advanced notification has the technical benefit of creating a buffer-zone on the roadway 24 in the vicinity of the traffic-situation 14 and may improve the overall traffic-flow 22.

In the above example the traffic-situation 14 is caused by vehicles other than the host-vehicle 12 being involved in an accident. It is contemplated that situations may arise where the host-vehicle 12 itself is the cause of the traffic-situation 14. For example, the host-vehicle 12 may be involved in an accident, or the host-vehicle 12 may be disabled due to some mechanical failure of the host-vehicle 12. As such, while not illustrated in the drawings, it is contemplated that the request 16 may be sent by the host-vehicle 12 in response to the host-vehicle 12 being the cause of the traffic-situation 14.

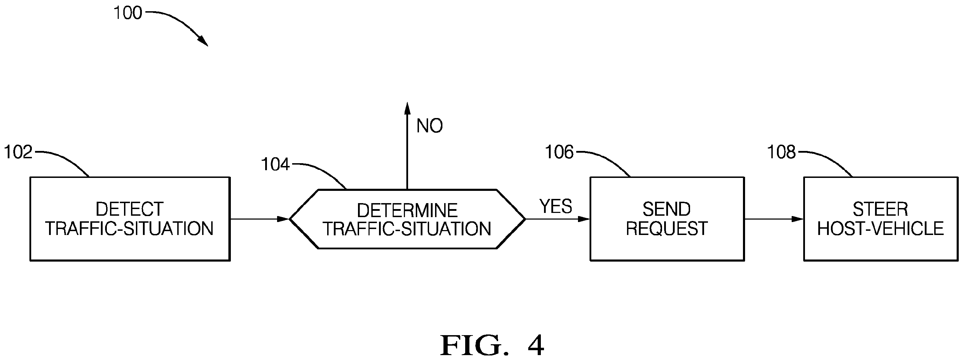

Fig. 4 illustrates another embodiment of a traffic control method 100. The traffic control method 100 in an improvement over other traffic control methods because the traffic control method 100 recognizes a developing traffic-situation 14 and requests 16 a travel-lane 18 to be designated for use by a host-vehicle 12.

Step 102, DETECT TRAFFIC-SITUATION, includes detecting, with a detector 20, a traffic-situation 14 characterized as inhibiting traffic-flow 22. In the example illustrated in Fig. 1, the detector 20 is a camera mounted on the host-vehicle 12. The traffic-situation 14 may include a traffic-volume greater than a traffic-threshold, a blockage of a portion of the roadway 24 ahead due to an emergency vehicle and/or a traffic accident, or may be due to a speed-limited-vehicle traveling on the roadway 24 ahead (e.g. a farm implement or construction equipment), or may be caused by a steep a grade on the roadway 24 ahead where truck traffic is unable to maintain the posted speed limits.

Step 104, DETERMINE TRAFFIC-SITUATION, includes determining that the traffic-situation 14 has occurred, with a controller-circuit 26 configured to communicate with the detector 20 and a traffic-device 28. The traffic-device 28 is operable to indicate a lane-designation 30 of a travel-lane 18. The traffic-device 28 may include a barrier 32 that blocks access to a restricted-lane 40 of the roadway 24, as illustrated in Fig. 2. The traffic-device 28 may also include a sign or traffic-light that indicates which lanes are open for travel in the specified direction, such as reversible-lanes 46, as illustrated in Figs. 3A-3B. The location of the traffic-device 28 may be indicated by a digital-map 44 in communication with the controller-circuit 26 as described above.

Step 106, SEND REQUEST, includes sending a request 16 to the traffic-device 28 with the controller-circuit 26. The request 16 is indicative of a desired-designation 34 of the travel-lane 18 in accordance with a determination by the controller-circuit 26 that the traffic-situation 14 has occurred. The desired-designation 34 includes operation of the barrier 32 to an open-state 42, as illustrated in Fig. 2. The desired-designation 34 also includes specific travel-lanes 18 to be restricted to use by the host-vehicle 12 and other-vehicles 36 to bypass a traffic accident, as illustrated in Figs. 3A-3B.

Step 108, STEER HOST-VEHICLE, includes steering the host-vehicle 12 with the controller-circuit 26. The controller-circuit 26 is configured to operate the host-vehicle 12 in an automated-mode 38 characterized by the controller-circuit 26 steering the host-vehicle 12. In accordance with the lane-designation 30 corresponding to the desired-designation 34 in step 106, the controller-circuit 26 steers the host-vehicle 12 in the automated-mode 38 into the travel-lane 18.

Accordingly, a traffic control system 10 (the system 10), a controller-circuit 26 for the system 10, and a traffic control method 100 are provided. The system 10 recognizes a developing traffic-situation 14 and requests 16 a travel-lane 18 to be designated for use by the host-vehicle 12 (and other-vehicles 36) and may improve the traffic-flow 22 on the roadway 24.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items. Additionally, directional terms such as upper, lower, etc. do not denote any particular orientation, but rather the terms upper, lower, etc. are used to distinguish one element from another and locational establish a relationship between the various elements.

## Claims

1. A traffic control system (10), comprising:
a detector (20) configured to detect a traffic-situation (14) proximate to a host-vehicle (12), said traffic-situation (14) characterized as inhibiting traffic-flow (22); and
a controller-circuit (26) configured to communicate with the detector (20) and a traffic-device (28), said traffic-device (28) operable to indicate a lane-designation (30) of a travel-lane (18), wherein the controller-circuit (26) is configured to send a request (16) to the traffic-device (28), said request (16) indicative of a desired-designation (34) of the travel-lane (18) in accordance with a determination by the controller-circuit (26) that the traffic-situation (14) has occurred.

2. The traffic control system (10) in accordance with claim 1, wherein the controller-circuit (26) is configured to operate the host-vehicle (12) in an automated-mode (38) **characterized by** the controller-circuit (26) steering the host-vehicle (12).

3. The traffic control system (10) in accordance with claim 2, further comprising:
in accordance with the lane-designation (30) corresponding to the desired-designation (34), the controller-circuit (26) steering the host-vehicle (12), in the automated-mode (38), into the travel-lane (18).

4. The traffic control system (10) according to any one of the preceding claims, wherein the traffic-device (28) includes a barrier (32) that blocks access to a restricted-lane (40) of a roadway (24) and the desired-designation (34) includes operation of the barrier (32) to an open-state (42).

5. The traffic control system (10) according to any one of the preceding claims, wherein the traffic-situation (14) includes a traffic-volume greater than a traffic-thresho ld.

6. The traffic control system (10) according to any one of the preceding claims, wherein the traffic-situation (14) includes a blockage of a portion of the roadway (24) ahead.

7. The traffic control system (10) according to any one of the preceding claims, wherein the traffic-situation (14) is a speed-limited-vehicle traveling on the roadway (24) ahead.

8. A traffic control method (100), comprising:
detecting (102), with a detector (20), a traffic-situation (14) proximate to a host-vehicle (12), said traffic-situation (14) characterized as inhibiting traffic-flow (22);
determining (104) that the traffic-situation (14) has occurred, with a controller-circuit (26) configured to communicate with the detector (20) and a traffic-device (28), said traffic-device (28) operable to indicate a lane-designation (30) of a travel-lane (18); and
sending (106) a request (16) to the traffic-device (28), with the controller-circuit (26), said request (16) indicative of a desired-designation (34) of the travel-lane (18) in accordance with a determination by the controller-circuit (26) that the traffic-situation (14) has occurred.

9. The traffic control method (100) in accordance with claim 8, wherein the controller-circuit (26) is configured to operate the host-vehicle (12) in an automated-mode (38) **characterized by** the controller-circuit (26) steering the host-vehicle (12).

10. The traffic control method (100) in accordance with claim 9, further comprising:
in accordance with the lane-designation (30) corresponding to the desired-designation (34) the controller-circuit (26) steering (108) the host-vehicle (12), in the automated-mode (38), into the travel-lane (18).

11. The traffic control method (100) according to any one of the claims 8 to 10, wherein the traffic-device (28) includes a barrier (32) that blocks access to a restricted-lane (40) of a roadway (24) and the desired-designation (34) includes operation of the barrier (32) to an open-state (42).

12. The traffic control method (100) in accordance with claim 11, wherein the controller-circuit (26) is in communication with a digital-map (44) configured to indicate a location of the barrier (32) relative to the host-vehicle (12).

13. The traffic control method (100) according to any one of the claims 8 to 12, wherein the traffic-situation (14) includes a traffic-volume greater than a traffic-thresho ld.

14. The traffic control method (100) according to any one of the claims 8 to 13, wherein the traffic-situation (14) includes a blockage of a portion of the roadway (24) ahead.

15. The traffic control method (100) according to any one of the claims 8 to 14, wherein the traffic-situation (14) is a speed-limited-vehicle traveling on the roadway (24) ahead.
